# EUROPÄISCHE PATENTSCHRIFT

(11) **EP 1 529 719 B1**
(45) Veröffentlichungstag und Bekanntmachung des Hinweises auf die Patenterteilung: **24.01.2007**
(21) Anmeldenummer: 04026011.9
(22) Anmeldetag: 03.11.2004
(51) Int. Cl.: B62D 15/02

(54) **Fahrzeugführungsvorrichtung mit Querführung und Objekterkennung sowie entsprechendes Verfahren**
Vehicle guidance apparatus with lateral guiding and object recognition and corresponding method
Appareil de guidage de véhicule avec guidage latéral et reconaissance d'objets et procédé correspondant

(30) Priorität: 07.11.2003 DE 10351986
(43) Veröffentlichungstag der Anmeldung: 11.05.2005
(73) Patentinhaber: AUDI AG, 85045 Ingolstadt (DE)
(72) Erfinder: Buschardt, Boris, Dr., 85049 Ingoldstadt (DE)
(74) Vertreter: Thielmann, Frank

(56) Entgegenhaltungen:
- DE-A1- 10 218 010
- DE-A1- 19 933 327
- US-A- 5 765 116

## Beschreibung

Die vorliegende Erfindung betrifft eine Fahrzeugführungsvorrichtung mit einer Querführungseinrichtung zum Unterstützen der Querführung eines Fahrzeugs und einer Objekterkennungseinrichtung zum Erkennen von Objekten in Fahrtrichtung auf und in der Nähe einer Fahrspur. Darüber hinaus betrifft die vorliegende Erfindung ein entsprechendes Verfahren zum assistierten Führen eines Fahrzeugs.

Zur assistierten Fahrzeugführung können bekanntermaßen Querführungseinrichtungen verwendet werden. Derartige Systeme sind beispielsweise unter dem Namen HC-System (Heading Control) bekannt. Die Querführungsunterstützung erfolgt dabei in der Regel mit Hilfe von synthetischen Lenkmomenten, wobei die Fahrspur zumeist mit einer Video-Sensorik erkannt wird.

Darüber hinaus können Fahrzeuge mit Objekterkennungseinrichtungen zum Erkennen von Objekten auf der Fahrspur oder in der Nähe des Fahrzeugs ausgestattet sein. Ein Beispiel für eine solche Einrichtung wäre ein ACC-System (Adaptive Cruise Control), bei dem die Erkennung vorausfahrender Fremdfahrzeuge anhand von Radar- oder Lidar-Sensorik erfolgt. Beim Erkennen eines Fremdfahrzeugs reagiert das System mit einem schwachen, aktiven Bremseingriff.

Es wurden ferner Fahrzeuge vorgestellt, bei denen sowohl ein ACC-System zur Abstandsregelung in Längsrichtung als auch ein HC-System zur Querführungsunterstützung eingebaut sind. Als Beispiel wäre der Nissan Cima zu nennen.

Die Fahrzeugführung mit den genannten Systemen weist jedoch nach wie vor erhebliche Nachteile auf. Diese können anhand einer mehrspurigen Straße, wie beispielsweise eine Autobahn, erläutert werden. Wenn ein Fahrer ein anderes, eventuell sehr breites Fahrzeug auf einer Nachbarspur überholt, und die Fahrspur auf der anderen Seite frei ist, so wird er normalerweise nicht in der Mitte der eigenen Fahrspur an dem Nachbarfahrzeug vorbeifahren, sondem etwas versetzt mit etwas mehr Abstand zum Nachbarfahrzeug. Bei einer Fahrt mit dem HC-System wird der Fahrer aber immer unabhängig von der Verkehrssituation in die Mitte der eigenen Spur geführt.

Ein weiterer Nachteil der bekannten Systeme besteht darin, dass ein ACC-System häufig Schwierigkeiten hat, eine genaue Spurzuordnung der erkannten Objekte in Relation zur eigenen Fahrspur vorzunehmen. Dies führt dazu, dass beispielsweise in einer Kurve beim Überholen eines vorausfahrenden Fahrzeugs in fehlerhafter Weise ein Bremseingriff automatisch erfolgt. Eine ähnliche Situation ergibt sich bei Abbiegespuren, wenn das eigene Fahrzeug nicht erkennen kann, ob sich das Fremdfahrzeug auf der Abbiegespur oder auf der eigenen Spur befindet, und ebenfalls fehlerhaft einen Bremseingriff auslöst.

Aus der Druckschrift DE 102 18 010 A1 ist ein Verfahren und eine Vorrichtung zur Querführungsunterstützung bei Kraftfahrzeugen bekannt. Dabei wird ein Sollwert für die Querposition des Fahrzeugs bestimmt, die Ist-Position des Fahrzeugs relativ zu den Grenzen der befahrenen Spur mit einer Sensoreinrichtung erfasst und durch Soll-Ist-Vergleich ein Ausgangssignal für die Querführungsunterstützung berechnet. Außerdem werden Objekte auf mindestens einer Nebenspur geortet und der Sollwert für die Querposition wird in Abhängigkeit von Ortungsdaten dieses Objekts variiert.

Die Aufgabe der vorliegenden Erfindung besteht somit darin, die assistierte Fahrzeugführung dahingehend zu verbessern, dass sie den Gewohnheiten eines Fahrers näher kommt und Objekte eindeutiger einer Spur zugeordnet werden können.

Erfindungsgemäß wird diese Aufgabe gelöst durch eine Fahrzeugführungsvorrichtung mit einer Querführungseinrichtung zum Unterstützen der Querführung eines Fahrzeugs und einer Objekterkennungseinrichtung zum Erkennen von Objekten auf und in der Nähe einer Fahrspur des Fahrzeugs für die Längsführung des Fahrzeugs, wobei Informationen der Objekterkennungseinrichtung von der Querführungseinrichtung zur Querführung des Fahrzeugs verarbeitbar sind und Informationen der Querführungseinrichtung von der Objekterkennungseinrichtung zur Zuordnung eines Objekts zu einer Fahrbahn verwertbar sind.

Ferner ist erfindungsgemäß vorgesehen ein Verfahren zum assistierten Führen eines Fahrzeugs durch Unterstützen der Querführung des Fahrzeugs und automatisches Erkennen von Objekten auf und in der Nähe einer Fahrspur des Fahrzeugs für die Längsführung des Fahrzeugs, wobei Informationen über automatisch erkannte Objekte in Fahrtrichtung für die Querführung des Fahrzeugs verwendet werden und Informationen über die automatisierte Querführung zur Zuordnung eines Objekts zu einer Fahrbahn verwertet werden.

Vorzugsweise umfasst die Objekterkennungseinrichtung eine Abstandsregelungseinrichtung. Diese ist vielfach in einem Fahrzeug bereits vorhanden, so dass die von ihr gewonnenen Informationen mit denen der Querführungseinrichtung unter Erzielung eines Zusatznutzens kombiniert werden können. Anstelle oder zusätzlich zu der Abstandsregelungseinrichtung kann die Objekterkennungseinrichtung eine Totwinkelerkennungseinrichtung aufweisen. Auch hier führt die Kombination der bereitgestellten Informationen mit denen der Querführungseinrichtung zu einer Verbesserung der Fahrzeugführung.

Bei einer bevorzugten Ausgestaltung ist die Position und/oder Geschwindigkeit eines erkannten Objekts in Relation zum eigenen Fahrzeug und zu einer erkannten Fahrspur auswertbar. Somit kann die Querführung eines Fahrzeugs sehr präzise in Abhängigkeit des erkannten Objekts erfolgen.

Bei einer weiterentwickelten Ausführungsform kann die Querführungseinrichtung so eingestellt werden, dass eine für die Fahrzeugführung zu verwendende Sollfahrspur von der Mitte einer aktuellen Fahrbahn in Abhängigkeit eines von der Objekterkennungseinrichtung erkannten Objekts abweicht. Damit kann dem natürlichen Verhalten eines Fahrers, der mehr Abstand zu einem zu überholenden Fahrzeug sucht, Rechnung getragen werden.

Durch die Verknüpfung der Objekterkennungseinrichtung mit der Querführungseinrichtung können auch umgekehrt die Informationen der Querführungseinrichtung von der Objekterkennungseinrichtung zur Zuordnung eines Objekts zu einer Fahrbahn verwertet werden. Dies bedeutet, dass ein erkanntes Objekt eindeutiger einer Fahrspur zugeordnet werden kann.

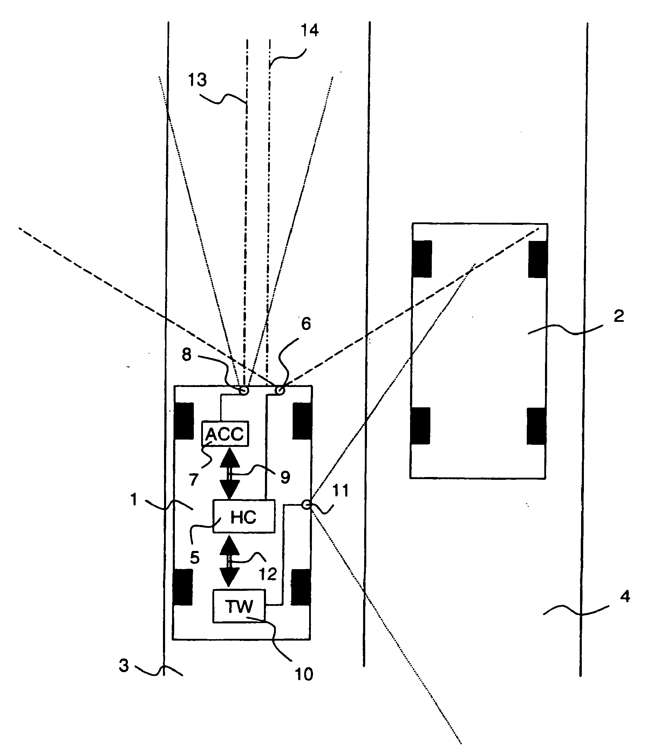

Die vorliegende Erfindung wird nun anhand der beigefügten Zeichnung näher erläutert, die eine Skizze eines überholenden Fahrzeugs mit kombinierten HC- und ACC-Systemen wiedergibt.

Das nachfolgend näher beschriebene Ausführungsbeispiel stellt eine bevorzugte Ausführungsform der vorliegenden Erfindung dar.

Entsprechend dem in der Figur dargestellten Beispiel überholt ein Fahrzeug 1 ein Fremd- bzw. Nachbarfahrzeug 2. Das Fahrzeug 1 befindet sich dabei auf einer ersten Fahrbahn 3 und das Fremdfahrzeug 2 auf einer zweiten Fahrbahn 4. Das Fahrzeug 1 ist mit einem HC-System 5 zur Querführungsunterstützung ausgerüstet. Ein Sensor 6 des HC-Systems 5 tastet hierzu die Fahrbahnen 3 und 4 mit einem großen Öffnungswinkel ab. Darüber hinaus ist das Fahrzeug 1 mit einem ACC-System 7 zur Objekterkennung ausgestattet. Der dazugehörige Sensor 8 tastet die Fahrspur des Fahrzeugs 1 hierzu mit einem geringeren Öffnungswinkel als der Sensor 6 ab. Die Reichweite des Sensors 8 ist größer als die des Sensors 6.

Zur Verbesserung der Fahrzeugführung können nun die Informationen des HC-Systems 5 und des ACC-Systems 7 miteinander kombiniert werden, was durch den Doppelpfeil 9 in der Figur symbolisiert ist. Die Kombination der Informationen kann in einem eigenen Steuergerät oder direkt in einem der beiden Systeme erfolgen.

Das Fahrzeug 1 verfügt des Weiteren über ein Totwinkelerkennungssystem 10, um den seitlichen Nahbereich des Fahrzeugs 1 mit einem entsprechenden Sensor 11 zu erfassen. Auch die Informationen des Totwinkelerkennungssystems 10 werden mit denen des HC-Systems 5 und des ACC-Systems 7 im Bedarfsfall kombiniert, was durch den Pfeil 12 in der Figur angedeutet ist.

Neben dem HC-System 5 zur Querführungsunterstützung müssen in dem Fahrzeug 1 nicht das ACC-System 7 und das TW-System 10 vorhanden sein. Vielmehr kann es für bestimmte Zwecke ausreichend sein, wenn nur eines dieser beiden Systeme vorhanden ist. Wesentlich dabei ist nur, dass die Informationen irgendeines Objekterkennungssystems mit denen des Querführungssystems zur Verbesserung der Fahrzeugführung kombiniert werden.

Im Folgenden sei die Funktionsweise des in der Figur dargestellten Fahrzeugführungssystems näher dargelegt. Vor dem Überholvorgang des Fahrzeugs 1 wird das Fremdfahrzeug 2 mit Hilfe des ACC-Systems 7, das beispielsweise mit einer Video-, Radar- oder Lidar-Sensorik 8 ausgestattet ist, erkannt. Zu diesem Zeitpunkt liegt das Fremdfahrzeug 2 noch in dem Detektionskegels des Sensors 8. Beim Überholvorgang verlässt das Fremdfahrzeug jedoch den Detektionskegel, aber die Bewegung des Fremdfahrzeugs 2 wird basierend auf der Objekterkennung prädiziert. Dazu wird die Position und Geschwindigkeit des erkannten Fremdfahrzeugs 2 in Relation zum eigenen Fahrzeug 1 sowie zu den mit Hilfe des HC-Systems 5 erkannten Fahrbahnen 3 und 4 ausgewertet. Unter der Annahme von sich nur langsam ändernden Randbedingungen kann sodann darauf geschlossen werden, wann sich das überholende Fahrzeug 1 neben dem überholten Fahrzeug 2 befindet. Falls das Fahrzeug 1 auch mit einem oder mehreren Nahbereichsradarsensoren (alternativ auch Lidar oder Video) zur Objekterkennung im seitlichen oder rückwärtigen Bereich, wie sie beispielsweise bei Spurwechselassistenzsystemen oder Totwinkelerkennungssystemen 10 verwendet werden, ausgestattet ist, kann die Prädiktion der Position des Fremdfahrzeugs 2 verfeinert und im Nahbereich durch Objekterkennung ersetzt werden. Damit kann eine zuverlässige Information über Fremdfahrzeuge 2 in den Nachbarspuren gewonnen werden. Grundsätzlich kann die Sensorik des HC-Systems gleichzeitig auch bei Eignung für das ACC-System verwendet werden.

Basierend auf den Informationen, die von dem ACC-System 7 und/oder TW-System 10 zur Verfügung gestellt werden, kann der Regelalgorithmus des HC-Systems 5 so angepasst werden, dass die Sollfahrspur 13 nicht in der Mitte 14 der aktuellen Fahrbahn 3 liegt. Die Sollfahrspur 13 kann vielmehr von dem überholten Fremdfahrzeug 2 weg versetzt sein, was, wie bereits erwähnt, dem natürlichen Fahrverhalten eines Fahrers eher entspricht. Auf diese Weise kann die Akzeptanz für ein solches Assistenzsystem deutlich gesteigert werden.

Das ACC-System 7 kann, wie ebenfalls oben bereits angedeutet, auch von der Sensorinformation des HC-Spurerkennungssystems 5 profitieren. Durch eine exakte Vorhersage des Spurverlaufs der eigenen Fahrspur sowie der Nachbarspuren ist es nämlich möglich, die vom ACC-System 7 erkannten Objekte eindeutiger den Fahrbahnen zuzuordnen. Diese eindeutige Zuordnung ermöglicht eine zuverlässigere Entscheidung zwischen relevanten Objekten, die eine Korrektur der Fahrzeugführung erfordern, und nicht relevanten Objekten. Hierdurch kann die Häufigkeit von Fehlbremsungen oder Nichtbremsungen insbesondere im Kurvenbereich deutlich reduziert und damit die Systemakzeptanz gesteigert werden.

## Patentansprüche

1. Fahrzeugführungsvorrichtung mit
- einer Querführungseinrichtung (5) zum Unterstützen der Querführung eines Fahrzeugs (1) und
- einer Objekterkennungseinrichtung (7, 10) zum Erkennen von Objekten auf und in der Nähe einer Fahrspur des Fahrzeugs (1), wobei Informationen der Objekterkennungseinrichtung (7, 10) von der Querführungseinrichtung (5) zur Querführung des Fahrzeugs verarbeitbar sind,
**dadurch gekennzeichnet, dass**
- Informationen der Querführungseinrichtung von der Objekterkennungseinrichtung (7, 10) zur Zuordnung eines Objekts (2) zu einer Fahrbahn (3, 4) verwertbar sind und
- die Querführungseinrichtung eine Prädiktionseinheit zum Vorhersagen einer Bewegung des erkannten Objekts (2) auf der Basis der Zuordnung zu einer Fahrbahn (3, 4) aufweist, so dass die Unterstützung der Querführung aufgrund der vorhergesagten Bewegung durchführbar ist.

2. Fahrzeugführungseinrichtung nach Anspruch 1, wobei die Objekterkennungseinrichtung (7, 10) eine Abstandsregelungseinrichtung (7) umfasst.

3. Fahrzeugführungseinrichtung nach Anspruch 1 oder 2, wobei die Objekterkennungseinrichtung (7, 10) eine Totwinkelerkennungseinrichtung (10) umfasst.

4. Fahrzeugführungsvorrichtung nach einem der vorhergehenden Ansprüche, wobei die Position und/oder Geschwindigkeit eines erkannten Objekts (2) in Relation zum eigenen Fahrzeug (1) und zu einer erkannten Fahrspur auswertbar ist.

5. Fahrzeugführungsvorrichtung nach einem der vorhergehenden Ansprüche, wobei die Querführungseinrichtung (5) so einstellbar ist, dass eine für die Fahrzeugführung zu verwendende Sollfahrspur (13) von der Mitte (14) einer aktuellen Fahrbahn (3) in Abhängigkeit eines von der Objekterkennungseinrichtung (7, 10) erkannten Objekts (2) abweicht.

6. Verfahren zum assistierten Führen eines Fahrzeugs (1) durch
- Unterstützen der Querführung des Fahrzeugs (1) und
- automatisches Erkennen von Objekten (2) auf und in der Nähe einer Fahrspur des Fahrzeugs (1) für die Längsführung des Fahrzeugs (1), wobei Informationen über automatisch erkannte Objekte (29) für die Querführung des Fahrzeugs (1) verwendet werden,
**dadurch gekennzeichnet, dass**
- Informationen über die automatisierte Querführung zur Zuordnung eines Objekts (2) zu einer Fahrbahn (3, 4) verwertet werden und
- eine Bewegung des Objekts (2) auf der Basis der Zuordnung zu einer Fahrbahn vorhergesagt wird, so dass
- das Unterstützen der Querführung anhand der vorhergesagten Bewegung des Objekts erfolgt.

7. Verfahren nach Anspruch 6, wobei das automatische Erkennen eines Objekts (2) im Rahmen einer Abstandsregelung erfolgt.

8. Verfahren nach Anspruch 6 oder 7, wobei das Erkennen eines Objekts (2) im Rahmen einer Totwinkelerkennung erfolgt.

9. Verfahren nach einem der Ansprüche 6 bis 8, wobei die Position und/oder Geschwindigkeit eines erkannten Objekts (2) in Relation zum eigenen Fahrzeug (1) und zu einer erkannten Fahrbahn (3, 4) ausgewertet wird.

10. Verfahren nach einem der Ansprüche 6 bis 9, wobei für die Querführung des Fahrzeugs (1) eine Sollfahrspur (13) ermittelt wird, die von der Mitte einer aktuellen Fahrbahn (3) in Abhängigkeit eines, erkannten Objekts (2) abweicht.

## Claims

1. Vehicle guidance apparatus, comprising
- a lateral guidance device (5) for assisting the lateral guidance of a vehicle (1), and
- an object recognition device (7, 10) for recognising objects on and in proximity to a traffic lane of the vehicle (1), information of the object recognition device (7, 10) being processable by the lateral guidance device (5) for lateral guidance of the vehicle,
**characterised in that**
- information of the lateral guidance device can be utilised by the object recognition device (7, 10) for allocating an object (2) to a traffic lane (3, 4), and
- the lateral guidance device includes a prediction unit for predicting a movement of the recognised object (2) on the basis of the allocation to a traffic lane (3, 4), so that the lateral guidance assistance can be executed on the basis of the predicted movement.

2. Vehicle guidance apparatus according to claim 1, **wherein** the object recognition device (7, 10) includes a distance regulation device (7).

3. Vehicle guidance apparatus according to claim 1 or 2, **wherein** the object recognition device (7, 10) includes a blind spot recognition device (10).

4. Vehicle guidance apparatus according to any one of the preceding claims, **wherein** the position and/or velocity of a recognised object (2) can be evaluated in relation to the host vehicle (1) and to a recognised traffic lane.

5. Vehicle guidance apparatus according to any one of the preceding claims, **wherein** the lateral guidance device (5) is so adjustable that a reference traffic lane (13) to be used for vehicle guidance deviates from the centre (14) of an actual traffic lane (3) in dependence on an object (2) recognised by the object recognition device (7, 10).

6. Method for assisted guidance of a vehicle (1) by means of
- support of the lateral guidance of the vehicle (1), and
- automatic recognition of objects (2) on and in proximity to a traffic lane of the vehicle (1) for longitudinal guidance of the vehicle (1), information on automatically recognised objects (29) being utilised for lateral guidance of the vehicle (1),
**characterised in that**
- information on the automated lateral guidance is utilised for allocating an object (2) to a traffic lane (3, 4), and
- a movement of the object (2) is predicted on the basis of the allocation to a traffic lane, so that
- the support of lateral guidance takes place with reference to the predicted movement of the object.

7. Method according to claim 6, **wherein** the automatic recognition of an object (2) is carried out within the framework of a distance regulation operation.

8. Method according to claim 6 or 7, **wherein** recognition of an object (2) takes place within the framework of a blind spot recognition operation.

9. Method according to any one of claims 6 to 8, **wherein** the position and/or velocity of a recognised object (2) is evaluated in relation to the host vehicle (1) and to a recognised traffic lane (3, 4)

10. Method according to any one of claims 6 to 9, **wherein** a reference traffic lane (13) which deviates from the centre of an actual traffic lane (3) in dependence on a recognised object (2) is determined for lateral guidance of the vehicle (1).

## Revendications

1. Dispositif de guidage de véhicule automobile avec
- un dispositif de guidage latéral (5) pour assister le guidage latéral d'un véhicule (1) et
- un dispositif de reconnaissance d'objets (7, 10) pour reconnaître des objets sur et à proximité d'une voie de circulation du véhicule (1), des informations du dispositif de reconnaissance d'objets (7, 10) pouvant être traitées par le dispositif de guidage latéral (5) pour le guidage latéral du véhicule
**caractérisé en ce que**
- des informations du dispositif de guidage latéral peuvent être exploitées par le dispositif de reconnaissance d'objets (7, 10) pour attribuer un objet (2) à une voie de circulation (3, 4) et
- **en ce que** le dispositif de guidage latéral comprend une unité de prévision pour prévoir un mouvement de l'objet reconnu (2) sur la base de l'attribution à une voie de circulation (3, 4), de sorte que l'assistance du guidage latéral est réalisable sur la base du mouvement prévu.

2. Dispositif de guidage de véhicule automobile selon la revendication 1, le dispositif de reconnaissance d'objets (7, 10) comportant un dispositif de régulation de l'espacement (7).

3. Dispositif de guidage de véhicule automobile selon la revendication 1 ou 2, le dispositif de reconnaissance d'objets (7, 10) comportant un dispositif de reconnaissance des angles morts (10).

4. Dispositif de guidage de véhicule automobile selon l'une quelconque des revendications précédentes, la position et/ou la vitesse d'un objet reconnu (2) pouvant être exploitées en relation au véhicule propre (1) et à une voie de circulation reconnue.

5. Dispositif de guidage de véhicule automobile selon l'une quelconque des revendications précédentes, le dispositif de guidage latéral (5) pouvant être réglé de telle façon qu'une voie de circulation théorique (13) à utiliser pour le guidage du véhicule est, en fonction d'un objet (2) reconnu par le dispositif de reconnaissance d'objets (7, 10), déviée du milieu (14) d'une voie de circulation actuelle (3).

6. Procédé pour le guidage assisté d'un véhicule automobile(1)par
- une assistance au guidage latéral du véhicule automobile (1) et par
- une reconnaissance automatique d'objets (2) sur et à proximité d'une voie de circulation du véhicule (1) pour le guidage longitudinal du véhicule (1), des informations sur des objets reconnus automatiquement (29) étant utilisées pour le guidage latéral du véhicule (1),
**caractérisé en ce que**
- des informations sur le guidage latéral automatisé sont exploitées pour l'attribution d'un objet (2) à une voie de circulation (3, 4) et
- un mouvement de l'objet (2) est prévu sur la base de l'attribution à une voie de circulation, de sorte que
- l'assistance du guidage latéral a lieu sur la base du mouvement prévu de l'objet.

7. Procédé selon la revendication 6, dans lequel la reconnaissance automatique d'un objet (2) a lieu dans le cadre d'une régulation de l'espacement.

8. Procédé selon la revendication 6 ou 7, dans lequel la reconnaissance d'un objet (2) a lieu dans le cadre d'une reconnaissance des angles morts.

9. Procédé selon l'une quelconque des revendications 6 à 8, dans lequel la position et/ou la vitesse d'un objet reconnu (2) sont exploitées par rapport au propre véhicule automobile (1) et à une voie de circulation reconnue (3, 4).

10. Procédé selon l'une quelconque des revendications 6 à 9, dans lequel une voie de circulation théorique (13) est déterminée pour le guidage latéral du véhicule (1), laquelle, en fonction d'un objet (2) reconnu, est déviée du milieu d'une voie de circulation actuelle (3).
